# EUROPEAN PATENT SPECIFICATION

(11) **EP 3 938 694 B1**
(45) Date of publication and mention of the grant of the patent: **15.10.2025**
(21) Application number: 20711285.5
(22) Date of filing: 09.03.2020
(51) Int. Cl.: F16L 25/00, E03C 1/12

(54) **PLUMBING CONNECTOR, PLUMBING ASSEMBLY COMPRISING THE SAME AND METHOD FOR MAKING UP THE PLUMBING ASSEMBLY**
SANITÄRANSCHLUSS, SANITÄR-BAUGRUPPE, DIE DENSELBEN UMFASST UND VERFAHREN ZUM HERSTELLEN DER SANITÄR-BAUGRUPPE
RACCORD DE PLOMBERIE, ENSEMBLE DE PLOMBERIE LE COMPRENANT ET PROCÉDÉ POUR CONSTITUER L'ENSEMBLE DE PLOMBERIE

(30) Priority: 10.03.2019 GB 201903198
(43) Date of publication of application: 19.01.2022
(73) Proprietor: McAlpine & Co. Limited, Glasgow, Strathclyde G52 4LF (GB)
(72) Inventor: MCALPINE, James Edward, Glasgow G52 4LF (GB)
(74) Representative: Marks & Clerk LLP
(86) International application number: PCT/GB2020/050556
(87) International publication number: WO 2020/183143

(56) References cited:
- EP-A2- 1 046 851
- WO-A1-01/25671
- DE-U1- 202006 014 736
- GB-A- 2 257 764
- US-A1- 2002 033 601
- US-A1- 2012 261 915

## Description

### FIELD

This relates to a plumbing connector, assembly and method. In particular, this relates to a plumbing connector, a plumbing assembly including the plumbing connector and a flexible and/or expandable pipe section and to a method for making up the plumbing assembly.

### BACKGROUND

Plumbing fittings are provided in a wide range of different forms, sizes and materials to suit different applications and regional variations in plumbing codes.

In the case of non-pressurised waste water plumbing assemblies for use with sinks, appliances and the like, making up the plumbing assembly may conventionally involve cutting sections of rigid pipe to the required length and connecting these using one or more plumbing fitting in the form of an angle connector, such as a 90 degree bend, 45 degree bend or the like.

More recently, plumbing assemblies using flexible pipe sections have been developed for use with such waste water fittings. However, while the use of plumbing assemblies using flexible pipe sections provides benefits over conventional assemblies in some instances, there remains a number of challenges.

For example, while the use of flexible pipe sections reduces or obviates the requirement for angle connectors and cutting pipe sections to size on site, making up of the assembly using flexible pipe sections can nevertheless involve significant time for the installer and thus costs for the customer.

In applications where restrictions on access make conventional angle connectors impractical or impossible, the use of a flexible pipe section has the advantage over conventional fittings in that the pipe may be adapted to the required shape. However, such connections still require access to make up the assembly, which due to the same restrictions on access noted above, may mean that the use of such assemblies using flexible pipe remains impractical or impossible.

Also, as with conventional angle connectors, plumbing assemblies using flexible pipe sections are subject to expansion and retraction, in use, due to thermal effects of fluid flow and/or environment, such that any inaccuracies in making up the assembly may result in a leak requiring remedial work at significant time and expense.

US 2012/261915 A1 describes a coupling for a suction line having a corrugated outer surface. The coupler comprises a collar having an inner surface, an internal projection formed on the inner surface of the collar and adapted to be received in a valley of the suction line to restrict axial movement of the suction line relative to the collar. A receiver is formed in the collar axially outward of the internal projection. A shank has a first portion adapted to be inserted in the suction line and a second portion extending outward of the first portion, wherein the second portion is adapted to attach the hose shank to an emergency vehicle. A flange extends radially outwards between the first portion and the second portion. A fastener is adapted to selectively extend from the receiver radially inward relative to the flange when located axially outward of the flange.

US 2002/033601 A1 describes a liquid-tight connector attached at one end to an aperture in a junction box, a panel box, a motor or the like. The opposite end of the connector is adapted to receive a free end of a length of flexible conduit. A cuff is positioned on the connector to conceal the free end of the conduit from view.

DE 20 2006 014736 U1 describes a pipe connection for waste water pipes in caravans, mobile homes or the like, which connects the free end of a flexible, severed spiral hose to a rigid plastic pipe, the connecting element comprising a pipe sleeve which on the one hand has an external thread area which can be screwed into the end of the spiral hose, and on the other hand has a widened area into which the plastic pipe end can be inserted.

WO 01/25671 A1 describes a hose construction including a tubular hose with a coupling. The coupling includes an insert that is located in one end of the tubular hose. A segmented clamp having first and second clamp segments is used to connect the coupling to the hose. Each of the clamp segments has a first end and a second end, with the second end of the first clamp segment being pivotably connected to the first end of the second clamp segment, and the second end of the second clamp segment being configured for connection to the first end of the first clamp segment. The clamp segments are positioned over the outer surface of the hose in a position over the insert. The first end of the first clamp segment and the second end of the second clamp segment include clamping locations that are adapted to receive a clamp such that the first clamp segment can be drawn into engagement with the second clamp segment to a fixed locking position so that the inner surface of the hose is sealed to the outer peripheral surface of the insert.

EP 1 046 851 A2 describes a flexible tube, the flexible tube is made of plastic material with at least one wall with ring grooves, corrugated or ribbed uniformly, equipped with a male and/or female end fitting. Each end fitting is fixed and held fast to the respective end of the tube by a fastening ring in plastic material which is printed over and tightly binding on the adjacent sections of the tube and fitting. The fastening ring crushes several external grooves of the ribbed tube and at least one external collar around the end fitting, impeding any axial or rotational movement of the fitting with respect to the tube.

GB 2257764 A describes a connector comprising an outer retaining projection provided on a tubular connector and an elastically expansible clamping ring comprising an inner hooked projection and an inner clamping projection axially spaced from each other. These projections are formed in such a manner that the ring, after having been threaded over the tube, may be forcedly slid back onto that portion of the tube fitted onto the tubular member until the hooked projection interferes with and rides over the retaining projection and the clamping projection lies between two adjacent circumferential projections of the tubular member.

### SUMMARY

According to a first aspect, there is provided a plumbing connector for use in a plumbing assembly including a flexible pipe section according to the technical features of claim 1. Advantageous embodiments of the invention are defined in the dependent claims.

The plumbing connector may be configured so that, in use, the first end portion of the plumbing connector can be pushed into, and retained in, the flexible pipe section without the requirement for rotation between the plumbing connector and the flexible pipe section. It will be understood that the term flexible pipe section is used herein to refer to a pipe section which is adaptable in its shape and/or axial length. For example, the flexible pipe section may be adapted by the user to define a selected angle, shape or length. The assembled plumbing connector and flexible pipe section thus provide a plumbing assembly suitable for a waste connection, such as a non-pressurised waste connection for a basin, bath, appliance such as washing machine, dishwasher or the like.

Beneficially, the plumbing connector provides a compact, quick, reliable and secure connector for a plumbing assembly including a flexible pipe section which provides a number of advantages over conventional fittings. For example, the ability to engage both the inside and outside of the flexible pipe section provides for a secure connection with the flexible pipe section which, for example, is capable of resisting forces experienced during installation and/or in use due to expansion and/or contraction due to thermal effects, reducing the risk of inaccuracies in making up the assembly resulting in a leak requiring remedial work at significant time and expense. Moreover, the plumbing connector requires only push forces to make up the connection with the flexible pipe section, and thus does not require rotation of the connector body and/or the collar (or the flexible pipe section) to make up the connection with the flexible pipe section. This permits quick connections to be made in applications where restrictions on access would make rotational connections impractical, or would otherwise involve significant additional time and costs. The plumbing connector also permits a connection to be made without the need to cut sections of pipe on site or provide additional angle connectors, thereby having a smaller space requirement than conventional fittings.

As described above, the first end portion of the connector body comprises a retainer arrangement which is configured to engage the inside of the flexible pipe section to secure the connector body to the flexible pipe section.

The retainer arrangement is configured to permit the flexible pipe section to pass over the retainer arrangement in a first axial direction but prevent or resist movement of the flexible pipe section in a second axial direction.

In use, on insertion of the first end portion of the connector body into the end of the flexible pipe section the retainer arrangement permits the flexible pipe section to pass over the retainer arrangement in a first axial direction (that is, the direction which brings the flexible pipe section and the connector body together) but prevents or resists movement of the flexible pipe section in a second axial direction (that is, the direction moving the connector body and the flexible pipe section apart).

Beneficially, the retainer arrangement may be configured to engage the inside of the flexible pipe section without the requirement to rotate the connector body.

As described above, the retainer arrangement is configured to retain the collar on the connector body.

The retainer arrangement is configured to permit the collar to pass over the retainer arrangement in the first axial direction but prevent or resist movement of the collar in the second axial direction.

In use, on location of the collar on the first end portion of the connector body, the retainer arrangement permits the collar to pass over the retainer arrangement in a first axial direction (that is, the direction which brings the collar and the connector body together) but prevents or resists movement of the collar in the second axial direction (that is, the direction moving the connector body and the collar apart).

The retainer arrangement may comprise a mechanical fastening arrangement.

The retainer arrangement may comprise a snap-fit retainer.

The one or more ribs may be integrally formed with the connector body.

As described above, the collar is configured for location on the first end portion of the connector body, and is configured to extend over and engage an outer surface of the flexible pipe section when the connector body is inserted into the flexible pipe section.

The collar may comprise a base portion.

The base portion may comprise an aperture configured to permit the collar to be located over the first end portion of the connector body. For example, the aperture may be sized to permit the collar to be located over the first end portion of the connector body.

In particular embodiments, the aperture may have an inner diameter sized to provide an interference fit with the connector body, more particularly an interference fit with the retainer arrangement.

The collar may be annular. For example, the base portion of the collar may define a ring.

The collar may further comprise a wall portion extending from the base portion. In use, the wall portion may be configured to extend, that is may be disposed over, the outer surface of the flexible pipe section when the first end portion of the connector body is inserted into the inside of the flexible pipe section.

The wall portion may be configured to engage the outer surface of the flexible pipe section.

The engagement between the wall portion and the outer surface of the flexible pipe section may secure or further secure the connection between the collar and the flexible pipe section.

The inner dimension, e.g. diameter, defined by the wall portion may be sized to may secure or further secure the connection between the collar and the flexible pipe section. For example, the inner dimension, e.g. diameter, defined by the wall portion may be sized to provide an interference fit with the outer surface of the flexible pipe section.

Alternatively, or additionally, the wall portion of the collar may be provided with a retainer arrangement to secure or further secure the connection between the collar and the flexible pipe section.

The retainer arrangement of the collar may comprise one or more ribs.

As described above, the connector body comprises a first end portion suitable for insertion into the end of the flexible pipe section.

The first end portion may define a male end portion of the connector body.

The first end portion may define a constant outer diameter. However, in particular embodiments the first end portion may comprise distinct sections having different outer diameters.

The first end portion may comprise a distal section.

The first end portion may comprise a proximal section.

An outer diameter of the proximal section may be greater than an outer diameter of the distal section.

The retainer arrangement for engaging the inside of the flexible pipe section may be disposed on the proximal section.

The first end portion may comprise a tapered section.

The tapered section may be interposed between the distal section and the proximal section.

The tapered section may define a ramp angle.

The ramp angle may secure or assist in securing the first end portion of the connector body to the inside of the flexible pipe section. In use, friction between the tapered section and the inside of the flexible pipe section on insertion of the first end portion into the flexible pipe section may secure or assist in securing the first end portion of the connector body to the inside of the flexible pipe section.

The first end portion of the connector body may define a constant inner diameter along its length. For example, in embodiments where the first end portion has distinct section having different outer diameters, the proximal section, distal section and tapered section may have the same inner diameter.

The first end portion may be configured to couple to a metric flexible pipe section e.g. having a diameter of 32 mm, 40 mm, 50 mm or 65 mm.

The first end portion may be configured to couple to a non-metric second pipe section e.g. having a diameter of 1 ¼ inch (31.75 mm), 1 ½ inch (38.1 mm) or 2 inch (50.8 mm). However, it will be recognised that the first end portion may be configured to couple to a flexible pipe section of any suitable configuration.

As described above, the connector body comprises a second end portion for coupling to a second pipe section so as to connect the flexible pipe section to the second pipe section.

The second end portion may be configured to couple to a second pipe section of the same or substantially the same dimensions to the flexible pipe section.

For example, the second end portion may be configured to couple to a metric second pipe section, e.g. having a diameter of 32 mm, 40 mm, 50 mm or 65 mm.

Alternatively, the second end portion may be configured to couple to a non-metric second pipe section e.g. having a diameter of 1 ¼ inch (31.75 mm), 1 ½ inch (38.1 mm) or 2 inch (50.8 mm).

The second portion may be configured to couple to a second pipe section of different dimensions to the flexible pipe section to which the first end portion is configured to couple.

For example, the first end portion may be configured to couple to a metric flexible pipe section having a given diameter and the second end portion may be configured to couple a metric second pipe section having a different diameter.

Alternatively, the first end portion may be configured to couple to a non-metric flexible pipe section having a given diameter and the second end portion may be configured to couple a non-metric second pipe section having a different diameter.

Alternatively, the first end portion may be configured to couple to a metric flexible pipe section having a given diameter and the second end portion may be configured to couple a non-metric second pipe section having a different diameter.

Alternatively, the first end portion may be configured to couple to a non-metric flexible pipe section having a given diameter and the second end portion may be configured to couple a metric second pipe section having a different diameter.

The given and different diameters above may comprise one or more of the dimensions described above, or another suitable diameter.

In some embodiments, the second end portion may define a female end portion.

The female end portion may be configured to receive an end portion of the second pipe section. The inner dimension, e.g. diameter, of the second end portion may be sized to receive the end of the second pipe section.

Alternatively, the second end portion may define a male end portion for insertion into the second pipe section.

For example, in some instances the second pipe section may comprise a waste connection, such as a non-pressurised waste connection for a basin, bath, appliance such as washing machine, dishwasher or the like, and the second end portion may be coupled directly to the waste connection.

The second end portion may comprise a connector arrangement for securing the second end portion to the second pipe section.

The connector arrangement may comprise a threaded connector arrangement or the like. The connector arrangement may be disposed on the outer surface of the second end portion. The connector arrangement may be formed on the outer surface of the second end portion.

In particular embodiments, the connector arrangement may comprise a compression fitting or the like.

In such embodiments, the connector may further comprise a compression ring, or the like.

Alternatively, the connector arrangement may comprise a push fit connector.

For example, the connector arrangement may form an interference fit with the second pipe section.

The connector arrangement may be configured to engage and secure to a nut of the second pipe section.

In such embodiments, the connector may further comprise a compression ring, or the like.

The connector arrangement may be configured to directly engage and secure to the second pipe section.

The second end portion may define a seat for receiving the end of second pipe section.

The connector body may comprise a flange portion

The flange portion may be interposed between the first end portion and the second end portion of the connector body.

The flange portion may define the interface between the first end portion and the second end portion.

In use, the flange portion may form an end stop or shoulder for the collar.

In particular embodiments, the connector body is a unitary construction.

Alternatively, the connector body may comprise a plurality of components coupled together.

In particular embodiments, the collar is a unitary construction.

Alternatively, the collar may comprise a plurality of components coupled together.

The plumbing connector may be formed as an assembly. For example, the collar and the connector body may be formed together as an assembly using an additive manufacturing process.

At least part of the plumbing connector may be constructed from a polymeric material, in particular but not exclusively polypropylene.

The connector body may be constructed from a polymeric material, in particular but not exclusively polypropylene.

The collar may be constructed from a polymeric material, in particular but not exclusively polypropylene.

The connector may comprise a sealing arrangement comprising one or more seal element, such as an o-ring seal element or the like.

According to a second aspect, there is provided a plumbing assembly according to the the technical features of claim 13.

As described above, the term flexible pipe section is used herein to refer to a pipe section which is adaptable in its shape and/or axial length. For example, the flexible pipe section may be adapted by the user to define a selected angle, shape or length. The assembled plumbing connector and flexible pipe section thus provide a plumbing assembly suitable for a waste connection, such as a non-pressurised waste connection for a basin, bath, appliance such as washing machine, dishwasher or the like.

The flexible pipe section may be expandable, that is the flexible pipe section may be configured so that its axial length can be increased. The flexible pipe section may be contractible, that is the flexible pipe section may be configured so that its axial length can be decreased.

The flexible pipe section may comprise a plurality of segments.

The segments may be coupled together or formed to permit one or more of the segments to be collapsed together to reduce the overall length of the flexible pipe section or vice-versa to be expanded/ moved apart to axially increase the overall length of the flexible pipe section.

Alternatively or additionally, the segments may be coupled together or formed to permit one or more of the segments to be pivoted relative to another segment to adapt the shape of the flexible pipe section.

The plumbing assembly may comprise a second plumbing connector.

The second plumbing connector may also comprise a plumbing connector according to the first aspect.

The second plumbing connector may be the same or different to the first plumbing connector.

According to a third aspect, there is provided a kit of parts according to the the technical features of claim 14.

The plumbing assembly may comprise a second plumbing connector.

The second plumbing connector may also comprise a plumbing connector according to the first aspect.

The second plumbing connector may be the same or different to the first plumbing connector.

According to a fourth aspect, there is provided a method for making up a plumbing assembly, according to the method steps of claim 15.

Where not already supplied as such, the method may comprise locating the collar on the first end portion of the connector body.

It should be understood that the features defined above or described below may be utilised, either alone or in combination, with any other defined feature, and as defined in the appended claims.

### DESCRIPTION OF THE DRAWINGS

These and other aspects of the present invention will now be described, by way of example only, with reference to the accompanying drawings, in which:
Figure 1 shows an exploded view of a plumbing connector; and
Figure 2 shows an enlarged view of the connector body of the plumbing connector shown in Figure 1;
Figure 3 shows an enlarged view of the collar of the plumbing connector shown in Figure 1;
Figure 4 shows a plumbing assembly utilising the plumbing connector shown in Figure 1;
Figure 5 an alternative plumbing connector to that shown in Figure 1;
Figure 6 shows an enlarged view of part of the plumbing connector shown in Figure 5;
Figure 7 shows a plumbing assembly utilising the plumbing connector shown in Figure 5;
Figure 8 an alternative plumbing connector to that shown in Figures 1 and 5;
Figure 9 shows an enlarged view of part of the plumbing connector shown in Figure 8; and
Figure 10 shows a plumbing assembly utilising the plumbing connector shown in Figure 8.

### DETAILED DESCRIPTION

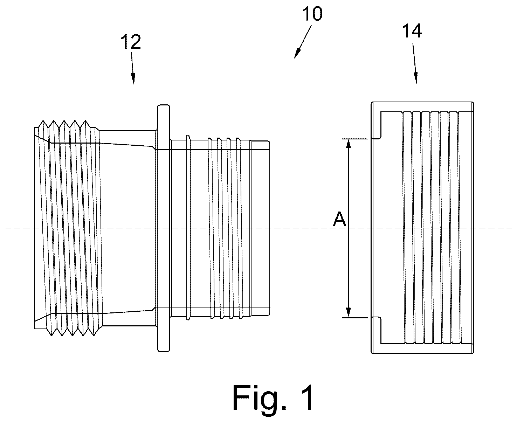

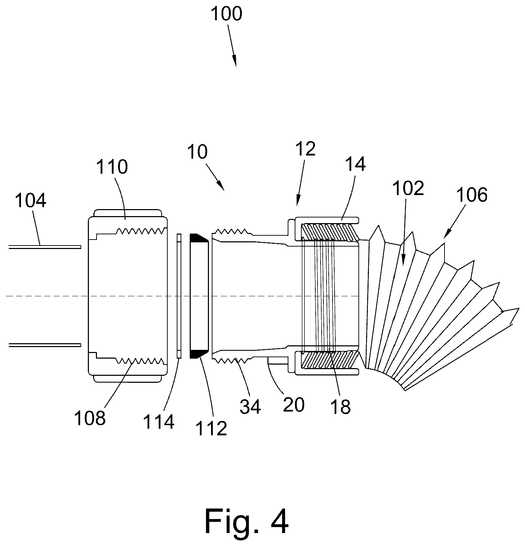

Referring first to Figure 1 of the accompanying drawings, there is shown a plumbing connector 10 for use in a plumbing assembly including a flexible pipe section (such as assembly 100 and flexible pipe section 102 shown in Figure 4 and described below).

As shown in Figure 1, the plumbing connector 10 comprises a connector body 12 and a collar 14 configured for location on the connector body 12. In use, and as will be described below, part of the connector body 12 is configured for insertion into the end of the flexible pipe section102 to engage and secure the plumbing connector 10 to the flexible pipe section 102, the collar 14 configured to extend over and engage an outer surface of a flexible pipe section 102.

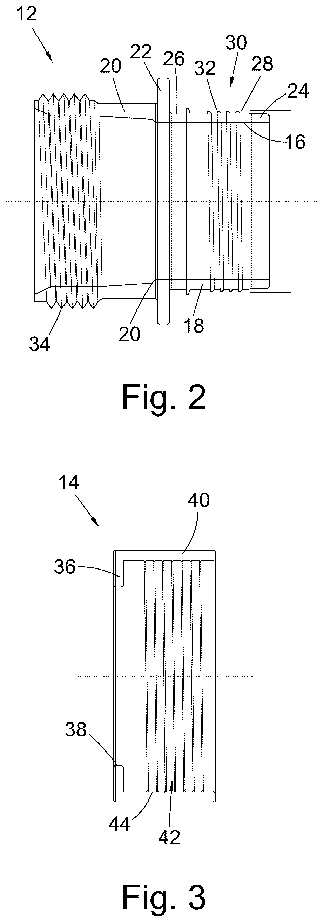

Referring now also to Figure 2 of the accompanying drawings, which shows an enlarged view of the connector body 12 shown in Figure 1, the connector body 12 is generally tubular in construction, having an axial throughbore 16 therethrough defining an axial flow passage through the connector body 12.

The connector body 12 has a first, male, end portion 18 configured for insertion into and engaging the inside of the flexible pipe section 102 (shown in Figure 4) and a second end portion 20 for coupling to a second pipe section 104 (shown in Figure 4) so as to connect the flexible pipe section 102 to the second pipe section 104. The first end portion 18 and second end portion 20 are separated by flange portion 22, the flange portion 22 in use providing an end stop for the collar 14.

In the illustrated plumbing connector 10, the first end portion 18 of the connector body 12 has a distal section 24, a proximal section 26 and a tapered section 28, the tapered section 28 being interposed between and forming a transition between the distal section 24 and the proximal section 26. In use, the distal section 24 forms a leading end of the connector 12 for insertion into the flexible pipe section 102. The proximal section 26 is adjacent to the flange portion 22.

As shown in Figure 2, the outer diameter of the proximal section 26 is greater than the outer diameter of the distal section 24, the tapered section 28 defining a ramp angle.

In use, the ramp angle may secure or assist in securing the first end portion 18 of the connector body 12 to the inside of the flexible pipe section 102, friction between the tapered section 28 and the inside of the flexible pipe section 102 on insertion of the first end portion 18 into the flexible pipe section 102 securing or assisting in securing the first end portion 18 of the connector body 12 to the inside of the flexible pipe section 102.

As shown in Figure 2, while the outer diameter of the first end portion 18 varies along its length, the first end portion 18 of the connector body 12 has a constant inner diameter along its length.

A retainer arrangement 30 is formed on an outer surface of the first end portion 18, the retainer arrangement 30 configured to engage the inside of the flexible pipe section 102. In the illustrated connector 10 the retainer arrangement 30 is formed on the proximal section 26 of the first end portion 18.

In use, on insertion of the first end portion 18 of the connector body 12 into the end of the flexible pipe section 102, the retainer arrangement 30 permits the flexible pipe section102 to pass over the retainer arrangement 30 in a first axial direction (that is, the direction which brings the flexible pipe section 102 and the connector body 12 together) but prevents or resists movement of the flexible pipe section 102 in a second axial direction (that is, the direction moving the connector body 12 and the flexible pipe section 102 apart).

Beneficially, the retainer arrangement 30 is configured to engage the inside of the flexible pipe section 102 without the requirement to rotate the connector body 12.

As shown in Figure 2, in the illustrated connector 10 the retainer arrangement 30 takes the form of a plurality of ribs 32. Each rib 32 defines a ramp or ratchet profile which permits the flexible pipe section to pass over the rib 32 in a first axial direction (that is, the direction which brings the flexible pipe section 102 and the connector body 12 together) but prevents or resists movement of the flexible pipe section 102 in a second axial direction (that is, the direction moving the connector body 12 and the flexible pipe section 102 apart).

As described above, the collar 14 is configured for location on the first end portion 18 and the retainer arrangement 30 is also configured to retain the collar 14 on the connector body 12, the ribs 32 permitting the collar 14 to pass over the retainer arrangement 30 in the first axial direction but prevent or resist movement of the collar in the second axial direction.

Thus, in use, on location of the collar 14 on the first end portion 18 of the connector body 12, the retainer arrangement 30 permits the collar 14 to pass over the retainer arrangement 30 in a first axial direction (that is, the direction which brings the collar 14 and the connector body 12 together) but prevents or resist movement of the collar 14 in the second axial direction (that is, the direction moving the connector body 12 and the collar 14 apart).

As described above, the second end portion 20 of the connector body 12 is for coupling to a second pipe section 104 so as to connect the flexible pipe section 102 to the second pipe section 104.

In the illustrated connector 10, the second end portion 20 defines a female end portion for receiving an end of the second pipe section 104, the inner diameter of the second end portion 20 sized to receive the end of the second pipe section 104. A seat 34 forms an end stop for insertion of the second pipe section 104.

As shown in Figure 2, a connector arrangement in the form of threaded connection 34 is formed on the outer surface of the second end portion 20, the connection 34 configured to engage a nut (106 shown diagrammatically in Figure 4) of the second pipe section 104 to secure the connector body 12 to the second pipe section 104 and thus the flexible pipe section 102 to the second pipe section 104.

It will be recognised that while in the illustrated connector 12, the connection 34 engages a nut 106 associated with the second pipe section 104, the connection 34 may alternatively directly engage the second pipe section 104.

Referring now also to Figure 3 of the accompanying drawings, which shows an enlarged view of the collar 14, it can be seen that the collar 14 comprises an annular base portion 36 having aperture 38 configured to permit the collar 14 to be located over the first end portion 18 of the connector body 12 and a wall portion 40 extending from the base portion 36. In use, the wall portion 40 is configured to extend, i.e. is disposed over, the outer surface of the flexible pipe section 102 when the first end portion 18 of the connector body 12 is inserted into the inside of the flexible pipe section 104.

In the illustrated connector 10, the aperture 38 has an inner diameter sized to provide an interference fit with the connector body 12, more particularly an interference fit with the ribs 32 of the retainer arrangement 30.

As shown in Figure 3, the wall portion 40 is configured to engage the outer surface of the flexible pipe section 102, and has a retainer arrangement 42 to secure or further secure the connection between the collar 14 and the flexible pipe section 102.

In the illustrated connector 10, the retainer arrangement 42 of the collar 14 takes the form of a plurality of ribs 44 having a ramp or ratchet profile which permit the retainer arrangement 42 to pass over the flexible pipe section 102 but prevent or resist movement in the opposite direction.

Referring now also to Figure 4 of the accompanying drawings, there is shown the plumbing assembly 100 described briefly above. While Figure 4 shows the plumbing connector 10 and flexible pipe section 102 in assembled form, in order to better illustrate the components of the assembly 100 the second end portion 20 and its associated components are shown in exploded view.

As described above, the assembly 100 includes the plumbing connector 10 described above and flexible pipe section 102. The flexible pipe section 102 has segments 106 which are formed to permit one or more of the segments 106 to be collapsed together to reduce the overall length of the flexible pipe section 102 or vice-versa to be expanded/ moved apart to axially increase the overall length of the flexible pipe section 102. The segments 106 are also formed to permit one or more of the segments 106 to be pivoted relative to another segment 106 to adapt the shape of the flexible pipe section 102.

As shown in Figure 4, the first end portion 18 of the connector body 12 has been inserted, i.e. pushed, into the end of the flexible pipe section 102. The retainer arrangement 30 engages and secures the plumbing connector 10 to the flexible pipe section 102, and the collar 14 to the connector body 12.

The collar 14 is configured to extend over and engage an outer surface of flexible pipe section 102. The retainer arrangement 42 engages and secures the collar 14 to the flexible pipe section 102.

In the assembly 100 shown in Figure 4, the second end portion 20 defines a compression-type connector, the inner diameter of the second end portion 20 sized to receive the end of the second pipe section 104, while the thread connection 34 engages a corresponding thread connection 108 on nut 110.

As shown in Figure 4, a compression ring 112 is disposable around the second pipe section 104 and, when assembled, is interposed between the second end portion 20 of the connector body 12 and the second pipe section 104 to provide secure engagement therebetween when the thread connection 34 and 108 are engaged. A seal arrangement in the form of o-ring seal element 114 is disposable around the second pipe section 104 and, when assembled, is interposed between the compression ring 112 and the nut 110.

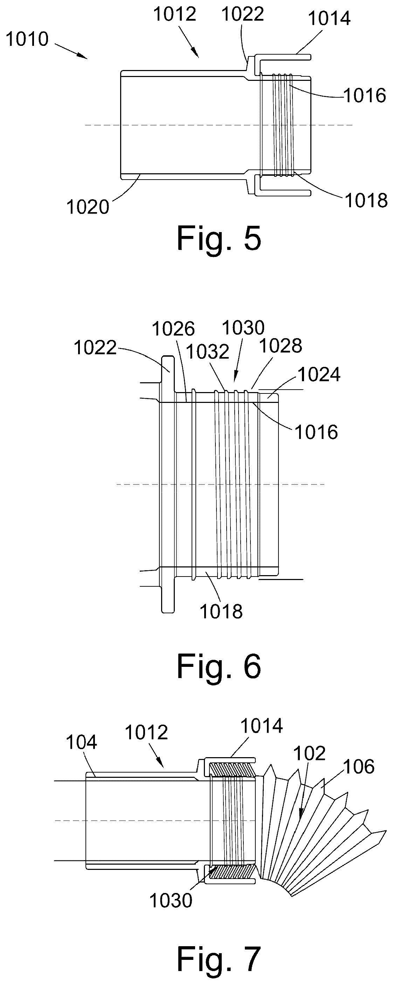

Referring now to Figure 5 of the accompanying drawings, there is shown an alternative plumbing connector 1010.

As shown in Figure 5, the plumbing connector 1010 comprises a connector body 1012 and a collar 1014 configured for location on the connector body 1012. The connector body 1012 is generally tubular in construction, having an axial throughbore 1016 therethrough defining an axial flow passage through the connector body 1012. The connector body 1012 has a first, male, end portion 1018 configured for insertion into and engaging the inside of the flexible pipe section 102 (shown in Figure 7) and a second end portion 1020 for coupling to a second pipe section 104 (shown in Figure 7) so as to connect the flexible pipe section 102 to the second pipe section 104. The first end portion 1018 and second end portion 1020 are separated by flange portion 1022, the flange portion 1022 in use providing an end stop for the collar 1014.

Referring now also to Figure 6 of the accompanying drawings, which shows an enlarged view of part of the connector body 1012 shown in Figure 5, the first end portion 1018 of the connector body 1012 is substantially identical to the first end portion 18 described above.

As in the first portion 18, the first end portion 1018 of the connector body 1012 has a distal section 1024, a proximal section 1026 and a tapered section 1028, the tapered section 1028 being interposed between and forming a transition between the distal section 1024 and the proximal section 1026. In use, the distal section 1024 forms a leading end of the connector 1012 for insertion into the flexible pipe section 102. The proximal section 1026 is adjacent to the flange portion 1022.

As shown in Figure 6, the outer diameter of the proximal section 1026 is greater than the outer diameter of the distal section 1024, the tapered section 1028 defining a ramp angle. In use, the ramp angle may secure or assist in securing the first end portion 1018 of the connector body 1012 to the inside of the flexible pipe section 102, friction between the tapered section 1028 and the inside of the flexible pipe section 102 on insertion of the first end portion 1018 into the flexible pipe section 102 securing or assisting in securing the first end portion 18 of the connector body 1012 to the inside of the flexible pipe section 102. While the outer diameter of the first end portion 1018 varies along its length, the first end portion 1018 of the connector body 1012 has a constant inner diameter along its length.

A retainer arrangement 1030 is formed on an outer surface of the first end portion 1018, the retainer arrangement 1030 configured to engage the inside of the flexible pipe section 102. In the illustrated connector 1010 the retainer arrangement 1030 is formed on the proximal section 1026 of the first end portion 1018.

In use, on insertion of the first end portion 1018 of the connector body 1012 into the end of the flexible pipe section 102, the retainer arrangement 1030 permits the flexible pipe section 102 to pass over the retainer arrangement 1030 in a first axial direction (that is, the direction which brings the flexible pipe section 102 and the connector body 1012 together) but prevents or resists movement of the flexible pipe section 102 in a second axial direction (that is, the direction moving the connector body 1012 and the flexible pipe section 102 apart).

Beneficially, the retainer arrangement 1030 is configured to engage the inside of the flexible pipe section 102 without the requirement to rotate the connector body 1012.

As shown in Figure 6, in the illustrated connector 1010 the retainer arrangement 1030 takes the form of a plurality of ribs 1032. Each rib 1032 defines a ramp or ratchet profile which permits the flexible pipe section to pass over the rib 1032 in a first axial direction (that is, the direction which brings the flexible pipe section 102 and the connector body 1012 together) but prevents or resists movement of the flexible pipe section 102 in a second axial direction (that is, the direction moving the connector body 1012 and the flexible pipe section 102 apart).

As described above, the collar 1014 is configured for location on the first end portion 1018 and the retainer arrangement 1030 is also configured to retain the collar 1014 on the connector body 1012, the ribs 1032 permitting the collar 1014 to pass over the retainer arrangement 1030 in the first axial direction but prevent or resist movement of the collar 1014 in the second axial direction.

Thus, in use, on location of the collar 1014 on the first end portion 1018 of the connector body 1012, the retainer arrangement 1030 permits the collar 1014 to pass over the retainer arrangement 1030 in a first axial direction (that is, the direction which brings the collar 1014 and the connector body 1012 together) but prevents or resist movement of the collar 1014 in the second axial direction (that is, the direction moving the connector body 1012 and the collar 1014 apart).

As described above, the second end portion 1020 of the connector body 1012 is for coupling to a second pipe section 104 so as to connect the flexible pipe section 102 to the second pipe section 104.

In the illustrated connector 1010 shown in Figures 5 and 6, the second end portion 1020 defines a plain end. In use, the second end portion 1020 is secured to the second pipe section 104 by an interference fit and/or by a fastener such as glue.

Figure 7 shows a plumbing assembly 1100 including the plumbing connector 1010 shown in Figure 5.

As shown in Figure 7, the assembly 1100 includes the plumbing connector 1010 described above and flexible pipe section 102. The first end portion 1018 of the connector body 1012 has been inserted, i.e. pushed, into the end of the flexible pipe section 102. The retainer arrangement 1030 engages and secures the plumbing connector 1010 to the flexible pipe section 102, and the collar 1014 to the connector body 1012.

The collar 1014 is configured to extend over and engage an outer surface of flexible pipe section 102. The retainer arrangement 1042 engages and secures the collar 1014 to the flexible pipe section 102.

In the assembly 1100 shown in Figure 7, the second end portion 1020 defines a plain end, the inner diameter of the second end portion 1020 sized to receive the end of the second pipe section 104. However, it will be recognised that the second end portion 1020 may alternatively define a male end portion for insertion into the second pipe section 104. In the assembly 1100, the second end portion 1020 is secured to the second pipe section 104 by an interference fit and/or by glue.

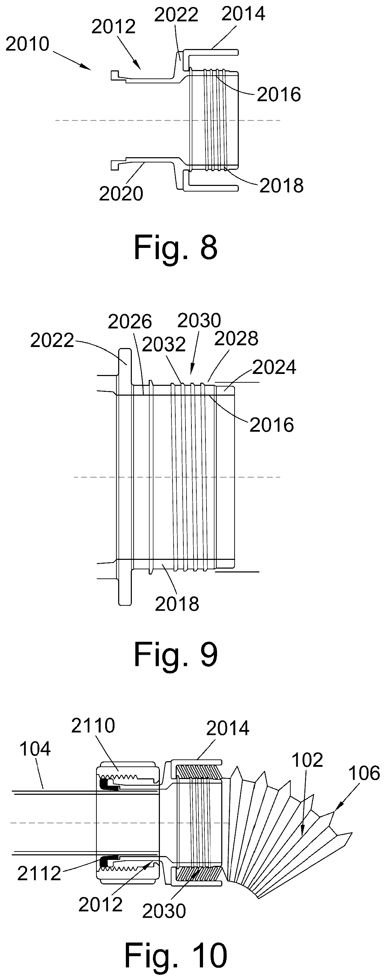

Referring now to Figure 8 of the accompanying drawings, there is shown an alternative plumbing connector 2010.

As shown in Figure 8, the plumbing connector 2010 comprises a connector body 2012 and a collar 2014 configured for location on the connector body 2012. The connector body 2012 is generally tubular in construction, having an axial throughbore 2016 therethrough defining an axial flow passage through the connector body 2012. The connector body 2012 has a first, male, end portion 2018 configured for insertion into and engaging the inside of the flexible pipe section 102 (shown in Figure 10) and a second end portion 2020 for coupling to a second pipe section 104 (shown in Figure 10) so as to connect the flexible pipe section 102 to the second pipe section 104. The first end portion 2018 and second end portion 2020 are separated by flange portion 2022, the flange portion 2022 in use providing an end stop for the collar 2014.

Referring now also to Figure 9 of the accompanying drawings, which shows an enlarged view of part of the connector body 2012 shown in Figure 8, the first end portion 2018 of the connector body 2012 is substantially identical to the first end portion 18 described above.

As in the first portion 18, the first end portion 2018 of the connector body 2012 has a distal section 2024, a proximal section 2026 and a tapered section 2028, the tapered section 2028 being interposed between and forming a transition between the distal section 2024 and the proximal section 2026. In use, the distal section 2024 forms a leading end of the connector 2012 for insertion into the flexible pipe section 102. The proximal section 2026 is adjacent to the flange portion 2022.

As shown in Figure 9, the outer diameter of the proximal section 2026 is greater than the outer diameter of the distal section 2024, the tapered section 2028 defining a ramp angle. In use, the ramp angle may secure or assist in securing the first end portion 2018 of the connector body 2012 to the inside of the flexible pipe section 102, friction between the tapered section 2028 and the inside of the flexible pipe section 102 on insertion of the first end portion 2018 into the flexible pipe section 102 securing or assisting in securing the first end portion 2018 of the connector body 2012 to the inside of the flexible pipe section 102. While the outer diameter of the first end portion 2018 varies along its length, the first end portion 2018 of the connector body 2012 has a constant inner diameter along its length.

A retainer arrangement 2030 is formed on an outer surface of the first end portion 2018, the retainer arrangement 2030 configured to engage the inside of the flexible pipe section 102. In the illustrated connector 2010 the retainer arrangement 2030 is formed on the proximal section 2026 of the first end portion 2018.

In use, on insertion of the first end portion 2018 of the connector body 2012 into the end of the flexible pipe section 102, the retainer arrangement 2030 permits the flexible pipe section 102 to pass over the retainer arrangement 2030 in a first axial direction (that is, the direction which brings the flexible pipe section 102 and the connector body 2012 together) but prevents or resists movement of the flexible pipe section 102 in a second axial direction (that is, the direction moving the connector body 2012 and the flexible pipe section 102 apart).

Beneficially, the retainer arrangement 2030 is configured to engage the inside of the flexible pipe section 102 without the requirement to rotate the connector body 2012.

As shown in Figure 9, in the illustrated connector 2010 the retainer arrangement 2030 takes the form of a plurality of ribs 2032. Each rib 2032 defines a ramp or ratchet profile which permits the flexible pipe section 102 to pass over the rib 2032 in a first axial direction (that is, the direction which brings the flexible pipe section 102 and the connector body 2012 together) but prevents or resists movement of the flexible pipe section 102 in a second axial direction (that is, the direction moving the connector body 2012 and the flexible pipe section 102 apart).

As described above, the collar 2014 is configured for location on the first end portion 2018 and the retainer arrangement 2030 is also configured to retain the collar 2014 on the connector body 2012, the ribs 2032 permitting the collar 2014 to pass over the retainer arrangement 2030 in the first axial direction but prevent or resist movement of the collar 2014 in the second axial direction.

Thus, in use, on location of the collar 2014 on the first end portion 2018 of the connector body 2012, the retainer arrangement 2030 permits the collar 2014 to pass over the retainer arrangement 2030 in a first axial direction (that is, the direction which brings the collar 2014 and the connector body 2012 together) but prevents or resist movement of the collar 2014 in the second axial direction (that is, the direction moving the connector body 2012 and the collar 2014 apart).

As described above, the second end portion 2020 of the connector body 2012 is for coupling to a second pipe section 104 so as to connect the flexible pipe section 102 to the second pipe section 104.

In the illustrated connector 1010 shown in Figures 8 and 9, the second end portion 2020 has an inner diameter sized to receive the end of the second pipe section 104. A nut 2110 is disposed about the second end portion 2020. A compression ring 2112 is disposed on the end of second end portion 2020 and is interposed between the nut 2110 and second pipe section 104, such that rotation of the nut 2110 compresses the compression ring 2112 into secure engagement with the second pipe section 104.

It should be understood that the above described embodiments are merely exemplary and that various modifications may be made thereto without departing from the scope of the invention as defined by the claims.

## Claims

1. A plumbing connector (10) for use in a plumbing assembly (100) including a flexible pipe section (102), the plumbing connector (10) comprising:
a connector body (12) having an axial throughbore (16) therethrough, the connector body (12) comprising a first end portion (18) configured for insertion into and for engaging an inside of the flexible pipe section (102) and a second end portion (20) for coupling to a second pipe section (104) so as to connect the flexible pipe section (102) to the second pipe section (104); and
a collar (14) configured for location on the first end portion (18) of the connector body (12), the collar (14) configured to extend over and engage an outer surface of the flexible pipe section (102) when the connector body (12) is inserted into the flexible pipe section (102),
wherein the first end portion (18) of the connector body (12) comprises a retainer arrangement (30) configured to engage the inside of the flexible pipe section (102) to secure the connector body (12) to the flexible pipe section (102) and retain the collar (14) to the connector body (12),
wherein the retainer arrangement (30) comprises one or more ribs (32) formed on an outer surface of the first end portion (18) of the connector body (12) and configured to engage the inside of the flexible pipe section (102), at least one of the ribs (32) defining a ramp or ratchet profile, the ramp or ratchet profile of said one or more ribs (32) of the retainer arrangement (30) configured to permit the flexible pipe section (102) and the collar to pass over the retainer arrangement (30) in a first axial direction but prevent or resist movement of the flexible pipe section (102) and the collar in a second axial direction.

2. The plumbing connector (10) of claim 1, wherein the collar (14) comprises a base portion (36) comprising an aperture (38) configured to permit the collar (14) to be located over the first end portion (18) of the connector body (12).

3. The plumbing connector (10) of claim 2, wherein the aperture (38) has an inner diameter sized to provide an interference fit with the connector body (12).

4. The plumbing connector (10) of claim 1, 2 or 3, wherein the collar (14) comprises a wall portion (40) configured to extend over and engage the outer surface of the flexible pipe section (102) when the first end portion (18) of the connector body (12) is inserted into the inside of the flexible pipe section (102).

5. The plumbing connector (10) of any preceding claim, wherein the collar (14) comprises a retainer arrangement (42) to secure or further secure the connection between the collar (14) and the flexible pipe section (102).

6. The plumbing connector (10) of claim 5, wherein the retainer arrangement (42) of the collar (14) comprise one or more ribs (44) formed on an inner surface of the collar (14).

7. The plumbing connector (10) of claim 6, wherein at least one of the ribs (44) formed on the inner surface of the collar (14) defines a ramp or ratchet profile.

8. The plumbing connector (10) of any preceding claim, wherein the first end portion (18) defines a male end portion of the connector body (12).

9. The plumbing connector (10) of any preceding claim, wherein the first end portion (18) comprises:
a distal section (24) having an outer diameter;
a proximal section (26) having an outer diameter greater than the outer diameter of the distal section (24); and
a tapered section (28) interposed between the distal section (24) and the proximal section (26).

10. The plumbing connector (10) of claim 9, wherein the retainer arrangement (30) is disposed on the proximal section (26).

11. The plumbing connector (10) of any preceding claim, wherein the second end portion (20) defines a female end portion.

12. The plumbing connector (10) of any preceding claim, wherein the second end portion (20) comprises:
a connector arrangement for securing the second end portion (20) to the second pipe section (104); or
a plain end for securing the second end portion (20) to the second pipe section (104).

13. A plumbing assembly (100) comprising:
the plumbing connector (10) according to any one of claims 1 to 12; and
a flexible pipe section (102).

14. A kit of parts comprising:
the plumbing connector (10) according to any one of claims 1 to 12; and
a flexible pipe section (102).

15. A method for making up a plumbing assembly (100) according to claim 13, the method comprising:
pushing the first end portion (18) of the connector body (12) into the end of the flexible pipe section (102), the ratchet profile of said one or more ribs (32) of the retainer arrangement (30) configured to permit the flexible pipe section (102) and the collar to pass over the retainer arrangement (30) in the first axial direction but prevent or resist movement of the flexible pipe section (102) and the collar in the second axial direction.

16. The method of claim 15, comprising the preliminary step of locating the collar on the first end portion (18) of the connector body (12).

## Patentansprüche

1. Sanitärverbinder (10) zur Verwendung in einer Sanitärbaugruppe (100), die einen flexiblen Rohrabschnitt (102) beinhaltet, wobei der Sanitärverbinder (10) Folgendes umfasst:
einen Verbinderkörper (12) mit einer axialen Durchgangsbohrung (16), wobei der Verbinderkörper (12) einen ersten Endabschnitt (18), der zum Einsetzen in und zum Eingreifen in eine Innenseite des flexiblen Rohrabschnitts (102) konfiguriert ist, und einen zweiten Endabschnitt (20) zum Koppeln mit einem zweiten Rohrabschnitt (104) umfasst, um den flexiblen Rohrabschnitt (102) mit dem zweiten Rohrabschnitt (104) zu verbinden; und
einen Kragen (14), der zur Anordnung auf dem ersten Endabschnitt (18) des Verbinderkörpers (12) konfiguriert ist, wobei der Kragen (14) so konfiguriert ist, dass er sich über eine Außenfläche des flexiblen Rohrabschnitts (102) erstreckt und in diese eingreift, wenn der Verbinderkörper (12) in den flexiblen Rohrabschnitt (102) eingesetzt wird,
wobei der erste Endabschnitt (18) des Verbinderkörpers (12) eine Halteanordnung (30) umfasst, die so konfiguriert ist, dass sie in die Innenseite des flexiblen Rohrabschnitts (102) eingreift, um den Verbinderkörper (12) an dem flexiblen Rohrabschnitt (102) zu befestigen und den Kragen (14) an dem Verbinderkörper (12) zu halten,
wobei die Halteanordnung (30) eine oder mehrere Rippen (32) umfasst, die an einer Außenfläche des ersten Endabschnitts (18) des Verbinderkörpers (12) ausgebildet und so konfiguriert sind, dass sie in die Innenseite des flexiblen Rohrabschnitts (102) eingreifen, wobei mindestens eine der Rippen (32) ein Rampen- oder Ratschenprofil definiert und das Rampen- oder Ratschenprofil der einen oder mehreren Rippen (32) der Halteanordnung (30) so konfiguriert ist, dass es dem flexiblen Rohrabschnitt (102) und dem Kragen ermöglicht wird, in einer ersten Axialrichtung über die Halteanordnung (30) zu gleiten, aber eine Bewegung des flexiblen Rohrabschnitts (102) und des Kragens in einer zweiten Axialrichtung verhindert oder dieser Widerstand entgegensetzt.

2. Sanitäranschluss (10) nach Anspruch 1, wobei der Kragen (14) einen Basisabschnitt (36) umfassend eine Öffnung (38) umfasst, die so konfiguriert ist, dass es dem Kragen (14) ermöglicht wird, sich über dem ersten Endabschnitt (18) des Verbinderkörpers (12) zu befinden.

3. Sanitäranschluss (10) nach Anspruch 2, wobei die Öffnung (38) einen Innendurchmesser aufweist, der so bemessen ist, dass er eine Presspassung mit dem Verbinderkörper (12) bereitstellt.

4. Sanitäranschluss (10) nach Anspruch 1, 2 oder 3, wobei der Kragen (14) einen Wandabschnitt (40) umfasst, der so konfiguriert ist, dass er sich über die Außenfläche 55187867-1 des flexiblen Rohrabschnitts (102) erstreckt und in diese eingreift, wenn der erste Endabschnitt (18) des Verbinderkörpers (12) in das Innere des flexiblen Rohrabschnitts (102) eingesetzt wird.

5. Sanitäranschluss (10) nach einem vorstehenden Anspruch, wobei der Kragen (14) eine Halteanordnung (42) umfasst, um die Verbindung zwischen dem Kragen (14) und dem flexiblen Rohrabschnitt (102) zu befestigen oder weiter zu befestigen.

6. Sanitäranschluss (10) nach Anspruch 5, wobei die Halteanordnung (42) des Kragens (14) eine oder mehrere Rippen (44) umfasst, die auf einer Innenfläche des Kragens (14) ausgebildet sind.

7. Sanitäranschluss (10) nach Anspruch 6, wobei mindestens eine der an der Innenfläche des Kragens (14) ausgebildeten Rippen (44) ein Rampen- oder Ratschenprofil bildet.

8. Sanitäranschluss (10) nach einem vorstehenden Anspruch, wobei der erste Endabschnitt (18) einen Einsteckendabschnitt des Verbinderkörpers (12) definiert.

9. Sanitäranschluss (10) nach einem vorstehenden Anspruch, wobei der erste Endabschnitt (18) Folgendes umfasst:
einen distalen Abschnitt (24) mit einem Außendurchmesser;
einen proximalen Abschnitt (26), mit einem Außendurchmesser, der größer ist als der Außendurchmesser des distalen Abschnitts (24); und
einen konischen Abschnitt (28), der zwischen dem distalen Abschnitt (24) und dem proximalen Abschnitt (26) eingefügt ist.

10. Sanitäranschluss (10) nach Anspruch 9, wobei die Halteanordnung (30) am proximalen Abschnitt (26) angeordnet ist.

11. Sanitäranschluss (10) nach einem vorstehenden Anspruch, wobei der zweite Endabschnitt (20) einen Aufnameendabschnitt definiert.

12. Sanitäranschluss (10) nach einem vorstehenden Anspruch, wobei der zweite Endabschnitt (20) Folgendes umfasst:
eine Verbindungsanordnung zum Befestigen des zweiten Endabschnitts (20) am zweiten Rohrabschnitt (104); oder
ein glattes Ende zum Befestigen des zweiten Endabschnitts (20) am zweiten Rohrabschnitt (104).

13. Sanitärbaugruppe (100), umfassend:
den Sanitäranschluss (10) nach einem der Ansprüche 1 bis 12; und
einen flexiblen Rohrabschnitt (102).

14. Kit aus Teilen, umfassend:
den Sanitäranschluss (10) nach einem der Ansprüche 1 bis 12; und
einen flexiblen Rohrabschnitt (102).

15. Verfahren zum Herstellen einer Sanitärbaugruppe (100) nach Anspruch 13, wobei das Verfahren umfasst:
Einschieben des ersten Endabschnitts (18) des Verbindungskörpers (12) in das Ende des flexiblen Rohrabschnitts (102), wobei das Ratschenprofil der einen oder mehreren Rippen (32) der Halteanordnung (30) so konfiguriert ist, dass es dem flexiblen Rohrabschnitt (102) und dem Kragen ermöglicht wird, in der ersten Axialrichtung über die Halteanordnung (30) zu gleiten, aber eine Bewegung des flexiblen Rohrabschnitts (102) und der Manschette in der zweiten Axialrichtung verhindert oder dieser Widerstand entgegensetzt.

16. Verfahren nach Anspruch 15, das den vorbereitenden Schritt des Anordnens des Kragens
am ersten Endabschnitt (18) des Verbinderkörpers (12) umfasst.

## Revendications

1. Raccord de plomberie (10) destiné à être utilisé dans un ensemble de plomberie (100) incluant une section de tuyau flexible (102), le raccord de plomberie (10) comprenant :
un corps de raccord (12) présentant un alésage traversant axial (16) le traversant, le corps de raccord (12) comprenant une première partie d'extrémité (18) configurée pour être insérée dans et pour entrer en prise avec l'intérieur de la section de tuyau flexible (102) et une seconde partie d'extrémité (20) pour se coupler à une seconde section de tuyau (104) de manière à raccorder la section de tuyau flexible (102) à la seconde section de tuyau (104) ; et
un collier (14) configuré pour être placé sur la première partie d'extrémité (18) du corps de raccord (12), le collier (14) étant configuré pour s'étendre sur et entrer en prise avec une surface extérieure de la section de tuyau flexible (102) lorsque le corps de raccord (12) est inséré dans la section de tuyau flexible (102),
dans lequel la première partie d'extrémité (18) du corps de raccord (12) comprend un agencement de retenue (30) configuré pour entrer en prise avec l'intérieur de la section de tuyau flexible (102) afin de fixer le corps de raccord (12) à la section de tuyau flexible (102) et maintenir le collier (14) sur le corps de raccord (12),
dans lequel l'agencement de retenue (30) comprend une ou plusieurs nervures (32) formées sur une surface extérieure de la première partie d'extrémité (18) du corps de raccord (12) et configurées pour entrer en prise avec l'intérieur de la section de tuyau flexible (102), au moins l'une des nervures (32) définissant un profil de rampe ou de cliquet, le profil de rampe ou de cliquet de ladite une ou plusieurs nervures (32) de l'agencement de retenue (30) étant configuré pour permettre à la section de tuyau flexible (102) et au collier de passer sur l'agencement de retenue (30) dans une première direction axiale, mais empêcher ou résister au mouvement de la section de tuyau flexible (102) et du collier dans une seconde direction axiale.

2. Raccord de plomberie (10) selon la revendication 1, dans lequel le collier (14) comprend une partie de base (36) comprenant une ouverture (38) configurée pour permettre au collier (14) d'être situé sur la première partie d'extrémité (18) du corps de raccord (12).

3. Raccord de plomberie (10) selon la revendication 2, dans lequel l'ouverture (38) présente un diamètre intérieur dimensionné pour fournir un ajustement serré avec le corps de raccord (12).

4. Raccord de plomberie (10) selon la revendication 1, 2 ou 3, dans lequel le collier (14) comprend une partie de paroi (40) configurée pour s'étendre sur et entrer en prise avec la surface extérieure de la section de tuyau flexible (102) lorsque la première partie d'extrémité (18) du corps de raccord (12) est insérée à l'intérieur de la section de tuyau flexible (102).

5. Raccord de plomberie (10) selon une quelconque revendication précédente, dans lequel le collier (14) comprend un agencement de retenue (42) pour fixer ou fixer davantage le raccordement entre le collier (14) et la section de tuyau flexible (102).

6. Raccord de plomberie (10) selon la revendication 5, dans lequel l'agencement de retenue (42) du collier (14) comprend une ou plusieurs nervures (44) formées sur une surface intérieure du collier (14).

7. Raccord de plomberie (10) selon la revendication 6, dans lequel au moins l'une des nervures (44) formées sur la surface intérieure du collier (14) définit un profil de rampe ou de cliquet.

8. Raccord de plomberie (10) selon une quelconque revendication précédente, dans lequel la première partie d'extrémité (18) définit une partie d'extrémité mâle du corps de raccord (12).

9. Raccord de plomberie (10) selon une quelconque revendication précédente, dans lequel la première partie d'extrémité (18) comprend :
une section distale (24) présentant un diamètre extérieur ;
une section proximale (26) présentant un diamètre extérieur supérieur au diamètre extérieur de la section distale (24) ; et
une section conique (28) intercalée entre la section distale (24) et la section proximale (26).

10. Raccord de plomberie (10) selon la revendication 9, dans lequel l'agencement de retenue (30) est disposé sur la section proximale (26).

11. Raccord de plomberie (10) selon une quelconque revendication précédente, dans lequel la seconde partie d'extrémité (20) définit une partie d'extrémité femelle.

12. Raccord de plomberie (10) selon une quelconque revendication précédente, dans lequel la seconde partie d'extrémité (20) comprend :
un agencement de raccord pour fixer la seconde partie d'extrémité (20) à la seconde section de tuyau (104) ; ou
une extrémité lisse pour fixer la seconde partie d'extrémité (20) à la seconde section de tuyau (104).

13. Ensemble de plomberie (100) comprenant :
un raccord de plomberie (10) selon l'une quelconque des revendications 1 à 12 ; et
une section de tuyau flexible (102).

14. Kit de pièces comprenant :
un raccord de plomberie (10) selon l'une quelconque des revendications 1 à 12 ; et
une section de tuyau flexible (102).

15. Procédé de fabrication d'un ensemble de plomberie (100) selon la revendication 13, le procédé comprenant :
le fait de pousser la première partie d'extrémité (18) du corps de raccord (12) dans l'extrémité de la section de tuyau flexible (102), le profil de cliquet de ladite une ou plusieurs nervures (32) de l'agencement de retenue (30) étant configuré pour permettre à la section de tuyau flexible (102) et au collier de passer sur l'agencement de retenue (30) dans la première direction axiale, mais empêcher ou résister au mouvement de la section de tuyau flexible (102) et du collier dans la seconde direction axiale.

16. Procédé selon la revendication 15, comprenant l'étape préliminaire de localisation du collier sur la première partie d'extrémité (18) du corps de raccord (12).
